# EUROPEAN PATENT APPLICATION

(11) **EP 3 770 996 A1**
(43) Date of publication of application: **27.01.2021**
(21) Application number: 19187933.7
(22) Date of filing: 23.07.2019
(51) Int. Cl.: H01M 4/04, H01M 4/58, H01M 4/62, H01M 4/1391, H01M 4/02

(54) **METHOD FOR MANUFACTURING LITHIUM IRON PHOSPHATE/CARBON COMPOSITE CATHODE MATERIAL FOR SECONDARY LITHIUM ION BATTERY**

(71) Applicant: Formosa Plastics Transport Corporation, Kaohsiung City 81465 (TW)
(72) Inventor: WANG, Ruey-Yu, 10508 Taipei City, (TW); CHEN, Seiko, 10508 Taipei City, (TW); YANG, Chun-Chen, 24301 New Taipei City, (TW); PIEN, Chieh-Yi, 24301 New Taipei City, (TW)
(74) Representative: Daniels, Jeffrey Nicholas

(57) **Abstract**

A method for manufacturing a lithium iron phosphate/carbon composite cathode material for a secondary lithium ion battery includes the steps of preparing a mixture solution which includes a lithium source, an iron source, a phosphate source, and a carbon precursor combination in a liquid medium; subjecting the mixture solution to a spray drying treatment to obtain a particulate powdery material; and sintering the particulate powdery material. The carbon precursor combination includes a porous graphene oxide-based additive and a first carbon precursor, which is different from the porous graphene oxide-based additive.

## Description

The disclosure relates to a method for manufacturing a lithium iron phosphate/carbon composite cathode material, and more particularly to a method for manufacturing a lithium iron phosphate/carbon composite cathode material for a secondary lithium ion battery

Recently, the performances of secondary lithium ion batteries have been significantly enhanced due to continuous development of materials and electrochemical techniques thereof. Therefore, the secondary lithium ion batteries have been widely used in various portable electronic products such as cell phones, notebooks, and the like.

A secondary lithium ion battery essentially includes an anode, a cathode, an electrolyte, and a separator. The material for the cathode not only predominates the capacity of the secondary lithium ion battery, but also affects safety of the secondary lithium ion battery. Therefore, the material for the cathode of the secondary lithium ion battery should have a high specific capacity and a superior thermal stability.

Among various metal oxides, such as LiCoO₂, LiNiO₂, LiMn₂O₄, LiFePO₄, and the like, LiFePO₄ is most popularly used in the cathode of the secondary lithium ion battery due to a stable structure thereof, which provides thermal stability and safety for the secondary lithium ion battery produced thereby.

Synthesis methods commonly used for manufacturing a lithium iron phosphate cathode material for the cathode of the secondary lithium ion battery include a sol-gel method, a co-precipitation method, a solid-state method, a spray pyrolysis method, a hydrothermal method, and the like.

Although the lithium iron phosphate cathode material has a specific olivine structure, which provides the thermal stability for the secondary lithium ion battery, it has disadvantages, such as a low electronic conductivity and a low lithium ion diffusion coefficient (D_{Li}⁺), which may limit the application thereof for the cathode of the secondary lithium ion battery.

Taiwanese Patent No. 1483448 discloses a process for producing a spherical lithium iron phosphate/carbon (LFP/C) composite cathode material. A spray drying technique is applied in the process to synthesize a spherical lithium iron phosphate/carbon (LFP/C) or lithium iron phosphorous oxide/carbon (LFPO/C) composite cathode material. The spherical LFP/C or LFPO/C composite cathode material has a porous spherical structure such that the conductivity thereof can be significantly improved. Therefore, the problem of low electronic conductivity encountered in conventional lithium iron phosphate powdery material can be solved. In addition, the spherical LFP/C or LFPO/C composite cathode material produced thereby has high rate characteristics and good charge/discharge cycling performances, and thus is useful for a cathode of a secondary lithium ion battery.

An object of the disclosure is to provide a new method for manufacturing a lithium iron phosphate/carbon composite cathode material for a secondary lithium ion battery so as to provide the lithium iron phosphate/carbon composite cathode material with further enhanced electrochemical performances.

According to the disclosure, there is provided a method for manufacturing a lithium iron phosphate/carbon composite cathode material for a secondary lithium ion battery. The method includes the steps of:
a) preparing a mixture solution which includes a lithium source, an iron source, a phosphate source, and a carbon precursor combination in a liquid medium;
b) subjecting the mixture solution to a spray drying treatment to obtain a particulate powdery material; and
c) sintering the particulate powdery material at an elevated temperature ranging from 600°C to 800°C,
wherein the carbon precursor combination includes a porous graphene oxide-based additive and a first carbon precursor, which is different from the porous graphene oxide-based additive.

In the method of the disclosure, in addition to the first carbon precursor, the carbon precursor combination includes a porous graphene oxide-based additive, which has a porous three-dimensional structure with micro-scale and nano-scale pores and a high specific surface area. Therefore, the lithium iron phosphate/carbon composite cathode material manufactured thereby can have a superior electronic conductivity and retain much more electrolyte so as to markedly enhance a lithium ion diffusion coefficient (D_{Li}⁺).

Other features and advantages of the disclosure will become apparent in the following detailed description of the embodiment (s) with reference to the accompanying drawings, of which:
Figure 1 is a flow diagram of an embodiment of a method for manufacturing a lithium iron phosphate/carbon composite cathode material for a secondary lithium ion battery according to the disclosure;
Figure 2 depicts scanning electronic microscope (SEM) images of a porous graphene oxide-based additive of Preparation Example 1, in which images (a) and (b) are taken at 5,000X magnification, and images (c) and (d) are taken at 10,000X magnification;
Figure 3 depicts a high resolution transmission electron microscope (HR-TEM) image of a porous graphene oxide-based additive of Preparation Example 1;
Figure 4 depicts another HR-TEM image of the porous graphene oxide-based additive of Preparation Example 1;
Figure 5 depicts an X-ray diffraction (XRD) pattern of a lithium iron phosphate/carbon composite cathode material of Example 1;
Figure 6 depicts SEM images of a lithium iron phosphate/carbon composite cathode material, including lithium iron phosphate and carbon (LFP/C) and the lithium iron phosphate/carbon composite cathode material of Example 1 (LFP/C/1%HTGO), in which images (a) and (b) shows the lithium iron phosphate/carbon composite cathode material of LFP/C in 1,000X and 10,000X magnifications, respectively, and images (c) and (d) shows the lithium iron phosphate/carbon composite cathode material of Example 1 at 1,000X and 10,000X magnifications, respectively;
Figure 7 depicts a graph plotting voltage versus capacity curve of various LFP composite cathodes at a first cycle at a charge/discharge rate of 0.1C;
Figure 8 depicts a graph plotting capacity versus cycle curve of various LFP composite cathodes over 5 cycles at a charge/discharge rate of 0.1C;
Figure 9 depicts a graph plotting capacity versus cycle curve of various LFP composite cathodes over 3 cycles at various charge/discharge rates (i.e., 0. 2C - 10C) ;
Figure 10 depicts a graph plotting capacity versus cycle curve of various LFP composite cathodes over 30 cycles at a charge/discharge rate of 0.1C;
Figure 11 depicts a graph plotting capacity versus cycle curve of various LFP composite cathodes over 30 cycles at a charge/discharge rate of 1C; and
Figure 12 depicts a graph plotting capacity versus cycle curve of various LFP composite cathodes over 100 cycles at a charge/discharge rate of 10C.

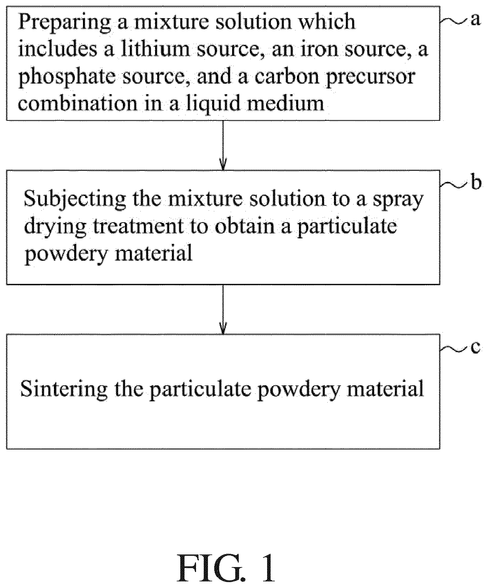

Referring to Figure 1, an embodiment of a method for manufacturing a lithium iron phosphate/carbon composite cathode material for a secondary lithium ion battery includes the steps of:
a) preparing a mixture solution which includes a lithium source, an iron source, a phosphate source, and a carbon precursor combination in a liquid medium (for example, water);
b) subjecting the mixture solution to a spray drying treatment to obtain a particulate powdery material; and
c) sintering the particulate powdery material at an elevated temperature ranging from 600°C to 800°C,
wherein the carbon precursor combination includes a porous graphene oxide-based additive and a first carbon precursor, which is different from the porous graphene oxide-based additive.

In certain embodiments, the lithium source is lithium hydroxide, lithium nitrate, lithium acetate, lithium chloride, lithium hydrogen carbonate, lithium carbonate, lithium hydrogen phosphate, lithium phosphate, or combinations thereof.

In certain embodiments, the iron source is ferric sulfate, ferrous oxalate, ferric phosphate, ferric acetate, ferric oxide, ferric nitrate, ferric chloride, or combinations thereof.

In certain embodiments, the phosphate source is ammonium phosphate, ammonium hydrogen phosphate, ammonium dihydrogen phosphate, lithium phosphate, lithium hydrogen phosphate, lithium ammonium phosphate, phosphoric acid, sodium phosphate, and combinations thereof.

In certain embodiments, the first carbon precursor is polystyrene spheres, glucose, fructose, sucrose, lactose, starch, polyvinyl alcohol, polymethyl methacrylate spheres, furan resin, or combinations thereof.

In certain embodiments, the porous graphene oxide-based additive is in an amount ranging from 0.1 wt% to 3 wt% based on a total weight of the lithium iron phosphate.

In certain embodiments, the porous graphene oxide-based additive is in an amount of 1 wt% based on the total weight of the lithium iron phosphate.

In certain embodiments, the porous graphene oxide-based additive is prepared by subjecting porous graphene oxide and a second carbon precursor to a hydrothermal treatment.

In certain embodiments, the second carbon precursor is polystyrene spheres, glucose, fructose, sucrose, lactose, starch, polyvinyl alcohol, polymethyl methacrylate spheres, furan resin, or combinations thereof.

In certain embodiments, the second carbon precursor is the same as the first carbon precursor.

In certain embodiments, the hydrothermal treatment is implemented at an elevated temperature ranging from 100°C to 230°C.

In certain embodiments, the hydrothermal treatment is implemented at an elevated pressure ranging from 100 atm to 200 atm.

The lithium iron phosphate/carbon composite cathode material manufactured by the method according to the disclosure can be mixed with conductive fillers and a binder (for example, a solution of polyvinylidene difluoride in N-methyl-2-pyrrolidone (a PVDF/NMP solution)) and an electro-conductive carbon material in a solvent (for example, N-methyl-2-pyrrolidone) to form a combination, which is then further processed to obtain an LFP composite cathode.

In certain embodiments, the electro-conductive carbon material is Super P conductive carbon black, a carbon sphere, a carbon nanofiber, graphene, a multiwall carbon nanotube, a single-wall carbon nanotube, nano-graphite, or combinations thereof.

In certain embodiments, the electro-conductive carbon material is graphene or reduced graphene oxide.

As described above, the carbon precursor combination used in the method for manufacturing a lithium iron phosphate/carbon composite cathode material according to the disclosure includes the porous graphene oxide-based additive which has a porous three-dimensional structure with micro-scale and nano-scale pores and a high specific surface area. Therefore, the lithium iron phosphate/carbon composite cathode material manufactured thereby can have a superior electronic conductivity and retain much more electrolyte so as to enhance a lithium ion diffusion coefficient (D_{Li}⁺). The electrochemical performance of a composite cathode made thereby can be further enhanced.

Examples of the disclosure will be described hereinafter. It is to be understood that these examples are exemplary and explanatory and should not be construed as a limitation to the disclosure. Preparation Example 1: Preparation of a porous graphene oxide-based additive (referred to as HTGO)

Sucrose (24 g) was dissolved with deionized water (96 ml) to form an aqueous sucrose solution. A graphene oxide dispersion (250 g, concentration of graphene oxide in the dispersion: 4 mg/ml) was added to the aqueous sucrose solution, followed by stirring at room temperature for 3 hours and implementing a hydrothermal treatment at 200°C for 12 hours to obtain a mixture solution. Potassium hydroxide (4 g) and deionized water (500 ml) were added to the mixture solution sequentially, followed by heating under stirring at 80°C for 3 days and drying. A sintering treatment was implemented in a tube furnace under an argon atmosphere at 800°C for 3 hours, followed by neutralizing with an aqueous hydrochloric acid solution (4M HCl) to a pH value of 7, washing with deionized water, and drying to obtain pure HTGO.

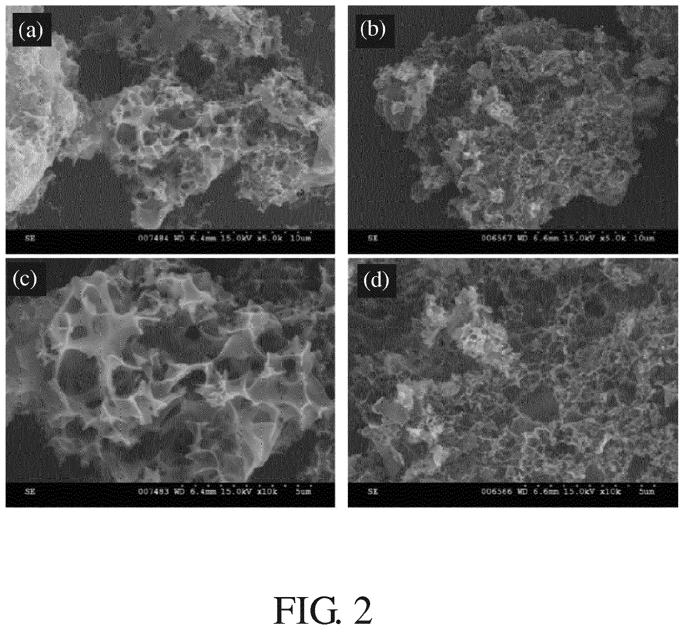

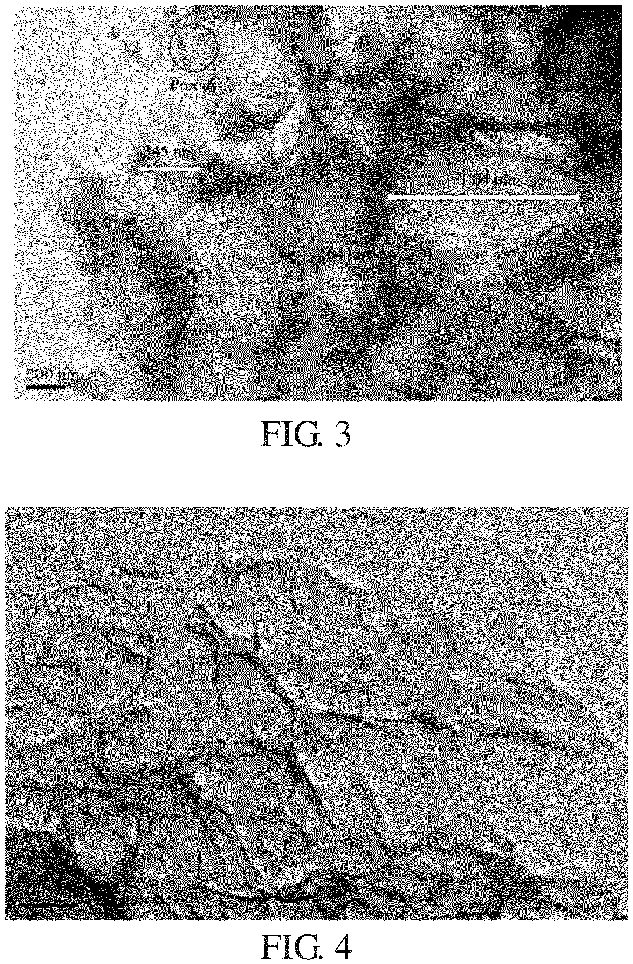

Surface morphology of HTGO was analyzed using a scanning electronic microscope (Manufacturer: Hitachi , Japan, Model: 2600) and a high resolution transmission electron microscope (Manufacturer: JEOL Ltd., Japan, Model: JEOL JEM-2100F). The results are shown in Figures 2 to 4.

As shown in Figures 2 to 4, HTGO has a porous three-dimensional structure with micro-scale and nano-scale pores and a high specific surface area. Example 1: Preparation of a lithium iron phosphate/carbon composite cathode material which includes lithium iron phosphate (referred to as LFP), carbon, and HTGO

Ferric nitrate (Fe(NO₃)₃·9H₂O, 24.240 g) was added to deionized water (50 ml) in a reactor, followed by placing the reactor in a water bath at 80°C and stirring using a DC-stirrer (manufacturer: Thermo Scientific, USA) at 300 rpm to obtain an aqueous ferric nitrate solution. HTGO (0.095 g) of Preparation Example 1 was dispersed using an ultrasonic cleaner (Ultrasonic cleaner DC900H, manufactured by Delta, Taiwan) for 1 hour, ground using an ultrasonic grinder (Sonicator manufactured by Qsonica, USA) for 2 hours, and then added to the aqueous ferric nitrate solution in the reactor. Lithium dihydrogen phosphate (LiH₂PO₄, 6.429 g) was mixed with citric acid (3.152 g) in deionized water (100 ml) to obtain an aqueous solution of lithium dihydrogen phosphate and citric acid, which was added to the aqueous ferric nitrate solution in the reactor under stirring to obtain a blend mixture solution.

The blend mixture solution was dried to evaporate solvent to form a viscous paste, which was further dried in a circulation oven (Circulator Drying Oven, CDV-902, Taiwan) at 120°C for 12 hours to obtain an LFP precursor material.

The LFP precursor material was ground into fine powders, followed by pre-sintering in a tubular furnace at 350°C in an atmosphere consisting of 95 vol% of argon and 5 vol% of hydrogen for 4 hours to obtain a pre-sintered powdery material. The pre-sintered powdery material was further milled using a high-energy ball mill (Manufacturer: Netzsch, Germany; Model: Minicer) at 2000 rpm for 60 minutes to reduce particle sizes thereof, followed by adding 5 wt% of sucrose (Manufacturer: Aldrich) and 10 wt% of polymethyl methacrylate spheres (Lab-made)and stirring for 12 hours to obtain a mixture solution.

The mixture solution was subjected to a spray drying treatment to obtain a spherical-like powdery material. Thereafter, the spherical-like powdery material was sintered in the tubular furnace sintering at 700°C in an atmosphere consisting of 95 vol% of argon and 5 vol% of hydrogen for 10 hours to obtain a lithium lithium iron phosphate/carbon composite cathode material.

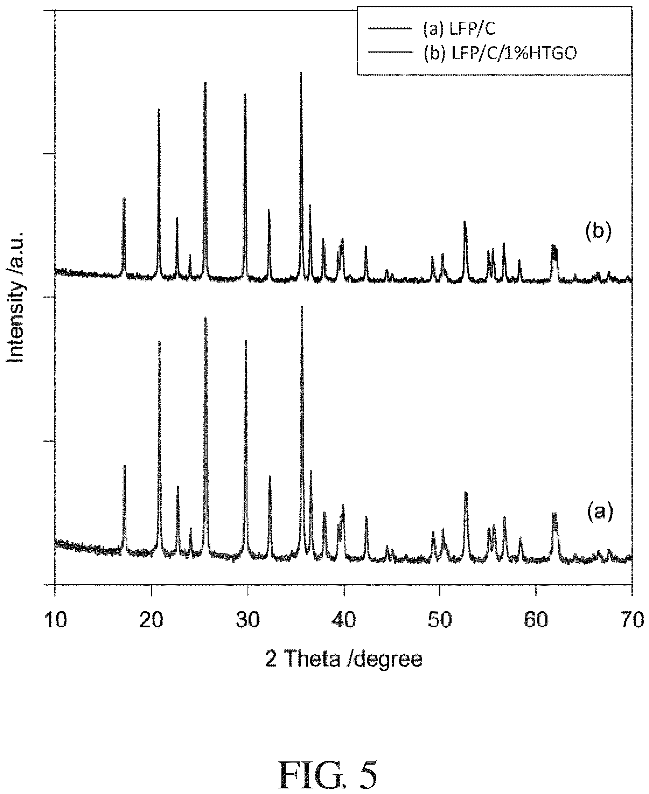

The lithium iron phosphate/carbon composite cathode material of Example 1 was analyzed using an X-ray diffractometer (Manufacturer: Bruker AXS GmgH, German, Model: D2 PHASER, Cu Ka, λ= 0.15406 nm, 30 kV, 10 mA). The result is shown in Figure 5.

Referring to Figure 5, which shows X-ray diffraction patterns of a lithium iron phosphate/carbon composite cathode material, including lithium iron phosphate and carbon (referred to as LFP/C), and the lithium iron phosphate/carbon composite cathode material of Example 1 (referred to as LFP/C/1%HTGO), it is shown that the X-ray diffraction patterns of LFP/C and LFP/C/1%HTGO are matched with that of LiFePO₄, indicating that the lithium iron phosphate/carbon composite cathode material of Example 1 has an olivine structure.

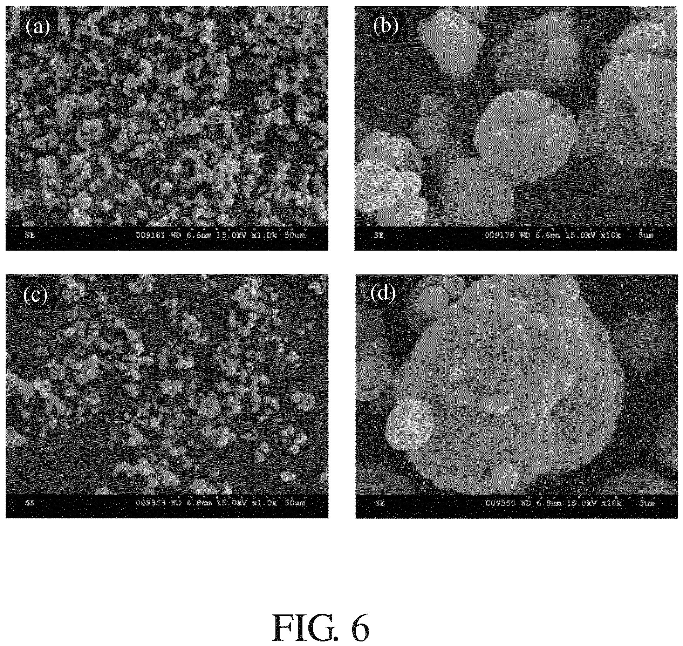

Surface morphology of the lithium iron phosphate/carbon composite cathode material of Example 1 was analyzed using a scanning electron microscope (manufacturer: Hitachi, Model: 2600S). The result is shown in Figure 6.

Referring to Figure 6, which shows scanning electron microscope (SEM) images of a lithium iron phosphate/carbon composite cathode material including lithium iron phosphate and carbon (LFP/C), and the lithium iron phosphate/carbon composite cathode material of Example 1 (LFP/C/1%HTGO), it is shown that the lithium iron phosphate/carbon composite cathode material of Example 1 (LFP/C/1%HTGO) has a spherical morphology with a secondary particle size that is larger than that of LFP/C.

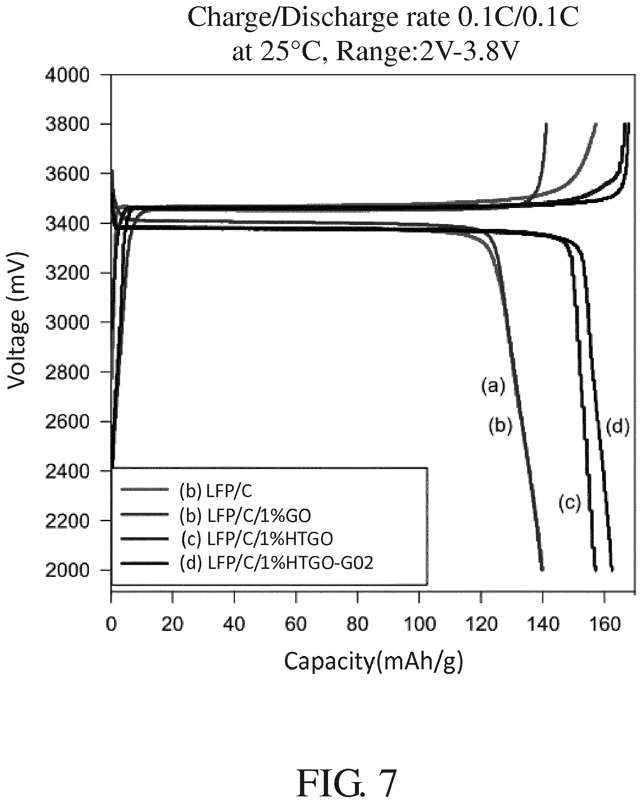

Since HTGO filler has a porous three-dimensional structure, the lithium iron phosphate/carbon composite cathode material of Example 1 can have a superior electronic conductivity, and retain much more electrolyte so as to enhance a lithium ion diffusion coefficient (D_{Li}⁺), as compared to the lithium iron phosphate/carbon composite cathode material of LFP/C. Evaluation Example 1:
Four cathodes were prepared respectively from a composite cathode material, including LFP and carbon (referred to as LFP/C), a composite cathode material including LFP, carbon, and 1 wt% of graphene oxide (referred to as LFP/C/1%GO), a composite cathode material including LFP, carbon, and 1 wt% of HTGO (referred to as LFP/C/1%HTGO), a composite cathode material including LFP, carbon, and HTGO with further addition of commercially available graphene (referred to as LFP/C/1%HTGO-G02) . Electrochemical performances of each of the cathodes were implemented using an Arbin BT 2043 battery charger (Manufacturer: Arbin Instruments, USA) with a 1 M solution of LiPF₆ in a solvent mixture of ethylene carbonate (EC) and diethylene carbonate (DEC) in a volume ratio of 1/1 as an electrolyte. The results are shown in Tables 1 to 3 and Figures 7 to 9.

**Table 1: Electrochemical performance at a first cycle at a charge/discharge rate of 0.1C**

| Samples | 1^{st}Qₛₚ*_{,ch} (mAh/g) | 1^{st}Q_{sp,dis} (mAh/g) | 1^{st}CE** (%) |
|---|---|---|---|
| LFP/C(SG***) | 157.22 | 140.09 | 89.10 |
| LFP/C/1%GO | 145.91 | 147.52 | 101.14 |
| LFP/C/1%HTGO | 166.76 | 157.18 | 94.26 |
| LFP/C/1%HTGO-G02 | 174.06 | 162.63 | 93.44 |

| | | | |
|---|---|---|---|
| *sp: specific charge capacity **CE: coulombic efficiency, which is a ratio of Q_{sp, dis}/Q_{sp, ch} ***SG: sol-gel method | | | |

**Table 2: Electrochemical performance over 5 cycles at a charge/discharge rate of 0.1C**

| Samples | 1^{st} cycle (mAh/g) | 2^{nd} cycle (mAh/g) | 3^{rd} cycle (mAh/g) | 4^{th} cycle (mAh/g) | 5^{th} cycle (mAh/g) |
|---|---|---|---|---|---|
| LFP/C(SG) | 140.09 | 140.09 | 139.07 | 139.48 | 139.68 |
| LFP/C/1%GO | 147.52 | 146.06 | 146.30 | 146.53 | 147.85 |
| LFP/C/1%HTGO | 157.18 | 157.45 | 157.45 | 157.99 | 158.78 |
| LFP/C/1%HTGO-G02 | 162.63 | 162.41 | 162.63 | 161.96 | 162.41 |

**Table 3: Electrochemical performance at various charge/discharge rates**

| | 0.2C, Q_{sp,dis} (mAh/g) | 1C, Q_{sp,dis} (mAh/g) | 5C, Q_{sp,dis} (mAh/g) | 10C, Q_{sp,dis} (mAh/g) |
|---|---|---|---|---|
| LFP/C(SG) | 139.32 | 120.09 | 91.03 | 75.21 |
| LFP/C/1%GO | 141.58 | 130.24 | 110.60 | 96.64 |
| LFP/C/1%HTGO | 149.28 | 142.79 | 125.72 | 113.22 |
| LFP/C/1%HTGO-G02 | 159.76 | 154.63 | 126.11 | 82.00 |

As shown in Table 1 and Figure 7, at a charge/discharge rate of 0.1C, the 1^{st} Qₛₚ,_{dis} values of LFP/C and LFP/C/1%GO cathodes are 140.09 mAh/g and 147.52 mAh/g, respectively, and the 1^{st}Q_{sp,dis} value of LFP/C/1%HTGO cathode is 157.18 mAh/g, which is higher than those of LFP/C and LFP/C/1%GO cathodes, indicating that the cathode made from the lithium iron phosphate/carbon composite cathode material of Example 1 has a superior electrochemical performance. In addition, the 1^{st} Q_{sp,dis} value of LFP/C/1%HTGO-G02 cathode is 162.63 mAh/g, which is much higher than that of LFP/C/1%HTGO cathode, indicating that when graphene is further added in the cathode, the electrochemical performance of the cathode can be further improved.

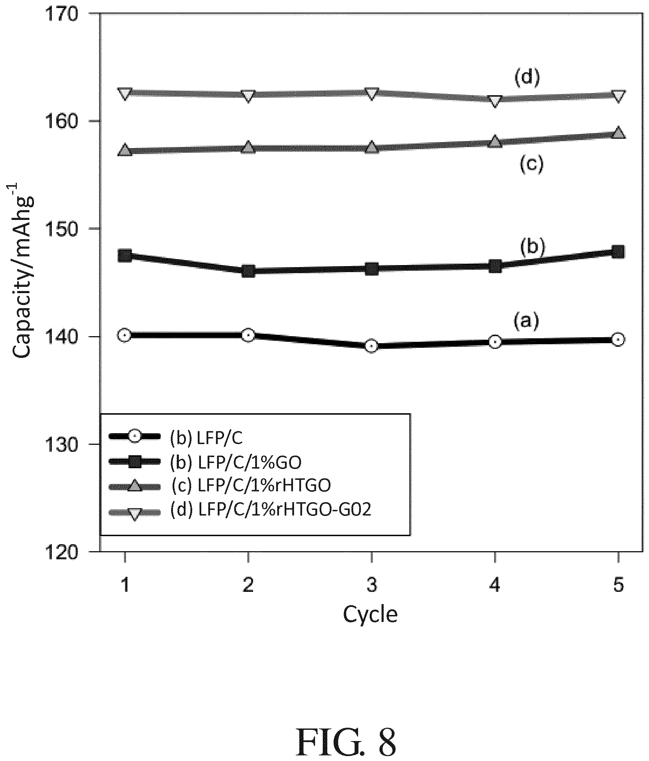

As shown in Table 2 and Figure 8, at a charge/discharge rate of 0.1C, the electrochemical performance of LFP/C/1%HTGO cathode is superior to those of LFP/C and LFP/C/1%GO cathodes. In addition, the electrochemical performance of LFP/C/1%HTGO-G02 cathode is superior that that of LFP/C/1%HTGO cathode, indicating that when graphene is further added in the cathode, the electrochemical performance of the cathode can be further enhanced.

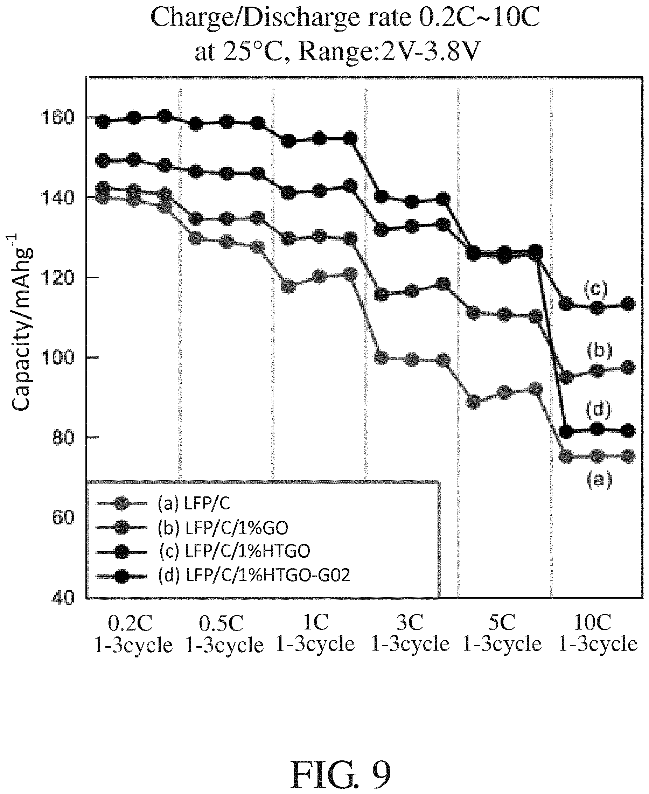

As shown in Table 3 and Figure 9, when a proper amount of as-prepared HTGO (i.e., 0.1 wt% to 3 wt% based on the weight of the lithium iron phosphate material) is used in the process for manufacturing a lithium iron phosphate/carbon composite cathode material, the electrochemical performance of a cathode made thereby can be affected more significantly at a high charge/discharge rate. Specifically, at charge/discharge rates ranging from 0.2C to 10C, a discharge specific capacity of LFP/C/1%HTGO cathode is much higher than that of LFP/C cathode by a value of about 10-40 mAh/g.

### Evaluation Example 2:

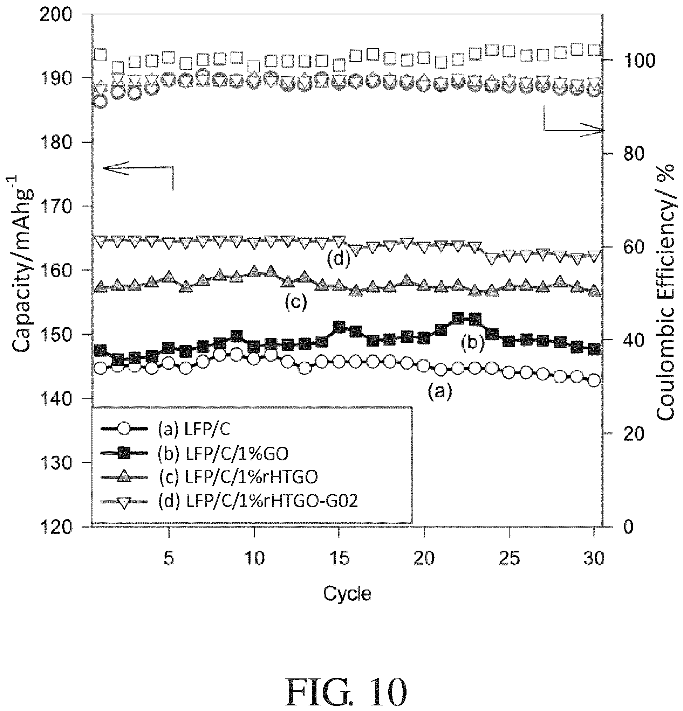

The composite cathodes made in Evaluation Example 1 were used for evaluating the electrochemical performance for 30 cycles at a charge/discharge rate of 0.1C, 30 cycles at a charge/discharge rate of 1C, and 100 cycles at a charge/discharge rate of 10C. The evaluation was implemented using an Arbin BT 2043 battery charger (Manufacturer: Arbin Instruments, USA) . The results are shown in Tables 4 to 6 and Figures 10 to 12.

**Table 4: Electrochemical performance for 30 cycles at a charge/discharge rate of 0.1C**

| Samples | Avg Q_{sp,dis} (mAh/g) | Last Q_{sp,dis} (mAh/g) | Avg CE (%) | CR (%) |
|---|---|---|---|---|
| LFP/C(SG) | 145.04 | 142.74 | 94.81 | 97.23 |
| LFP/C/1%GO | 148.87 | 147.68 | 100.44 | 95.80 |
| LFP/C/1%HTGO | 157.71 | 156.65 | 95.27 | 98.17 |
| LFP/C/1%HTGO-G02 | 163.83 | 162.41 | 95.64 | 98.37 |

**Table 5: Electrochemical performance for 30 cycles at a charge/discharge rate of 1C**

| Samples | Avg Q_{sp,dis} (mAh/g) | Last Q_{sp,dis} (mAh/g) | Avg CE (%) | CR (%) |
|---|---|---|---|---|
| LFP/C(SG) | 114.79 | 113.43 | 97.71 | 93.25 |
| LFP/C/1%GO | 128.45 | 127.77 | 99.19 | 97.84 |
| LFP/C/1%HTGO | 141.93 | 140.38 | 99.33 | 98.97 |
| LFP/C/1%HTGO-G02 | 154.79 | 151.16 | 99.25 | 95.12 |

**Table 6: Electrochemical performance for 100 cycles at a charge/discharge rate of 10C**

| Samples | Avg Q_{sp,dis} (mAh/g) | Last Q_{sp,dis} (mAh/g) | Avg CE (%) | CR (%) |
|---|---|---|---|---|
| LFP/C(SG) | 48.96 | 42.31 | 97.28 | 61.88 |
| LFP/C/1%HTGO | 109.23 | 104.09 | 99.25 | 89.50 |
| LFP/C/1%HTGO-G02 | 31.57 | 18.47 | 97.99 | 35.89 |

As shown in Table 4 and Figure 10, after 30 cycles at a charge/discharge rate of 0.1C, LFP/C cathode has a discharge specific capacity of 142.74 mAh/g and a capacity retention (CR%) of 97.23%, and LFP/C/1%HTGO cathode has a discharge specific capacity of 156.65 mAh/g and a capacity retention (CR%) of 98.17%, both of which are higher than those of LFP/C cathode. It is also found that after 30 cycles at a rate of 0.1C, LFP/C/1%HTGO-G02 cathode achieves a discharge specific capacity of 162.41 mAh/g and a capacity retention (CR%) of 98.37%, both of which are much higher than those of LFP/C/1%HTGO cathode, and even higher than those of LFP/C cathode.

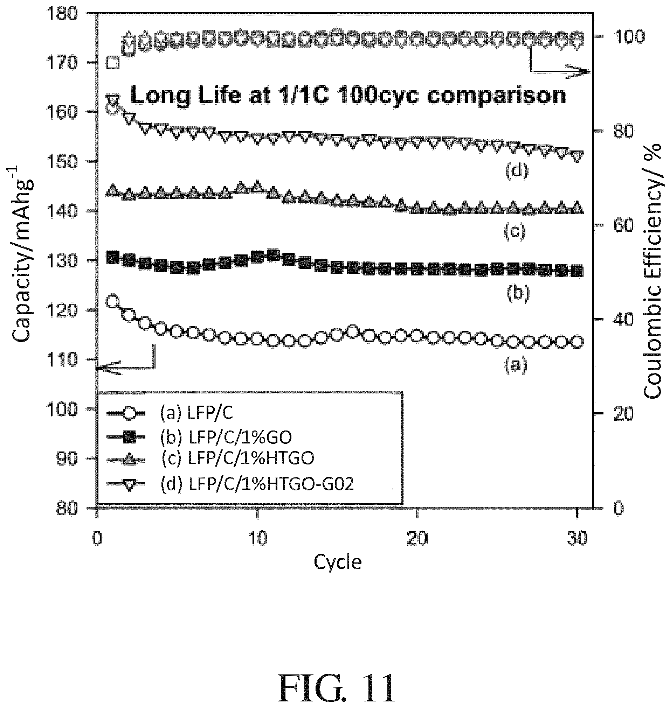

As shown in Table 5 and Figure 11, after 30 cycles at a charge/discharge rate of 1C, LFP/C cathode has an average discharge specific capacity of 114.79 mAh/g and a capacity retention (CR%) of 93.25%, and LFP/C/1%HTGO cathode has an average discharge specific capacity of 141.93 mAh/g and a capacity retention (CR%) of 98.97%, both of which are much higher than those of LFP/C cathode (without HTGO) . It is also found that after 30 cycles at a charge/discharge rate of 1C, LFP/C/1%HTGO-G02 cathode has an average discharge specific capacity of 154.79 mAh/g and a capacity retention (CR%) of 95.12%, both of which are higher than those of LFP/C cathode. It is found that the capacity retention (CR% = 95.12%) of LFP/C/1%HTGO-G02 cathode is lower than that (CR% = 98.97%) of LFP/C/1%HTGO cathode. It may result from the fact that lithium ion transport channels are slightly blocked over repeated charge/discharge cycles due to the presence of two-dimensional pure graphene (without pores) in the cathode.

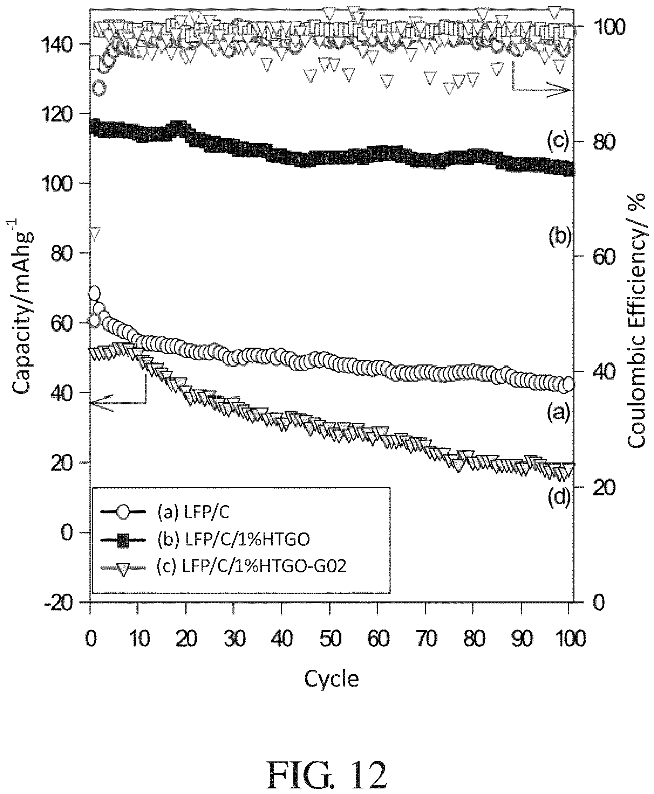

As shown in Table 6 and Figure 12, after 100 cycles at a charge/discharge rate of 10C, LFP/C cathode has an average discharge specific capacity of 48.96 mAh/g, a charge specific capacity of 42.31 mAh/g, and a capacity retention (CR%) of 61.88%, and LFP/C/1%HTGO cathode has an average discharge specific capacity of 109.23 mAh/g, a charge specific capacity of 104.09 mAh/g, and a capacity retention (CR%) of 89.50%,, all of which are significantly higher than those of LFP/C cathodes. It is also found that after 100 cycles at a charge/discharge rate of 10C, LFP/C/1%HTGO-G02 cathode has an average discharge specific capacity of 31.57 mAh/g, a charge specific capacity of 18.47 mAh/g, and a capacity retention (CR%) of 35.89%,, all of which are much lower than those of LFP/C cathodes. It may result from that lithium ion transport channels are blocked severely over repeated charge/discharge cycles at a high charge/discharge rate due to the presence of two-dimensional graphene in the cathode.

In the description above, for the purposes of explanation, numerous specific details have been set forth in order to provide a thorough understanding of the embodiment (s) . It will be apparent, however, to one skilled in the art, that one or more other embodiments may be practiced without some of these specific details . It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects.

## Claims

1. A method for manufacturing a lithium iron phosphate/carbon composite cathode material for a secondary lithium ion battery, comprising the steps of :
a) preparing a mixture solution which includes a lithium source, an iron source, a phosphate source, and a carbon precursor combination in a liquid medium;
b) subjecting the mixture solution to a spray drying treatment to obtain a particulate powdery material; and
c) sintering the particulate powdery material at an elevated temperature ranging from 600°C to 800°C,
**characterized in that** the carbon precursor combination includes a porous graphene oxide-based additive and a first carbon precursor, which is different from the porous graphene oxide-based additive.

2. The method according to claim 1, **characterized in that** the porous graphene oxide-based additive is in an amount ranging from 0.1 wt% to 3 wt% based on a total weight of the lithium iron phosphate.

3. The method according to claim 2, **characterized in that** the porous graphene oxide-based additive is in an amount of 1 wt% based on the total weight of the lithium iron phosphate.

4. The method according to any one of claims 1 to 3, **characterized in that** the porous graphene oxide-based additive is prepared by subjecting porous graphene oxide and a second carbon precursor to a hydrothermal treatment.

5. The method according to claim 4, **characterized in that** the second carbon precursor is the same as the first carbon precursor.

6. The method according to claim 4 or 5, **characterized in that** the hydrothermal treatment is implemented at an elevated temperature ranging from 100°C to 230°C.

7. The method according to any one of claims 4 to 6, **characterized in that** the hydrothermal treatment is implemented at an elevated pressure ranging from 100 atm to 200 atm.

8. The method according to any one of claims 1 to 7, **characterized in that** the first carbon precursor is selected from the group consisting of polystyrene spheres, glucose, fructose, sucrose, lactose, starch, polyvinyl alcohol, polymethyl methacrylate spheres, furan resin, and combinations thereof.

9. The method according to any one of claims 4 to 8, **characterized in that** the second carbon precursor is selected from the group consisting of polystyrene spheres, glucose, fructose, sucrose, lactose, starch, polyvinyl alcohol, polymethyl methacrylate spheres, furan resin, and combinations thereof.

10. The method according to any one of claims 1 to 9, **characterized in that** the lithium source is selected from the group consisting of lithium hydroxide, lithium nitrate, lithium acetate, lithium chloride, lithium hydrogen carbonate, lithium carbonate, lithium hydrogen phosphate, lithium phosphate, and combinations thereof.

11. The method according to any one of claims 1 to 10, **characterized in that** the iron source is selected from the group consisting of ferric sulfate, ferrous oxalate, ferric phosphate, ferric acetate, ferric oxide, ferric nitrate, ferric chloride, and combinations thereof.

12. The method according to any one of claims 1 to 11, **characterized in that** the phosphate source is selected from the group consisting of ammonium phosphate, ammonium hydrogen phosphate, ammonium dihydrogen phosphate, lithium phosphate, lithium hydrogen phosphate, lithium ammonium phosphate, phosphoric acid, sodium phosphate, and combinations thereof.
